# EUROPEAN PATENT SPECIFICATION

(11) **EP 4 014 177 B1**
(45) Date of publication and mention of the grant of the patent: **30.10.2024**
(21) Application number: 20747124.4
(22) Date of filing: 22.07.2020
(51) Int. Cl.: G06Q 10/00, G06Q 50/10, G06Q 50/12

(54) **A SYSTEM AND METHOD FOR PROVIDING ACCESS TO A USER**
SYSTEM UND VERFAHREN ZUR BEREITSTELLUNG EINES ZUGANGS FÜR EINEN BENUTZER
SYSTÈME ET PROCÉDÉ DE FOURNITURE D'ACCÈS À UN UTILISATEUR

(30) Priority: 14.08.2019 IN 201911032938
(43) Date of publication of application: 22.06.2022
(73) Proprietor: Carrier Corporation, Palm Beach Gardens, FL 33418 (US)
(72) Inventor: VURADI, Gowthami, Hyderabad, Telangana 500081 (IN); LINGALA, Ramesh, Hyderabad, Telangana 500081 (IN)
(74) Representative: Dehns
(86) International application number: PCT/IB2020/056866
(87) International publication number: WO 2021/028745

(56) References cited:
- US-A1- 2016 162 811
- US-A1- 2017 161 978
- US-A1- 2018 130 276

## Description

The present invention relates generally to access systems. More particularly, the invention relates to a method and a device for providing access of an accessing device to a user.

Currently, in today's era of technology, a user may easily book a room in a hotel through a hotel website or by using an application. Once the room is booked, the user may be notified with booking information such as date of booking, period of stay, type of room, or services opted by the user. When the user reaches the hotel, the user shows his booking information to a hotel staff or at a reception of the hotel and then the hotel staff requests the user to complete check-in formalities at the reception. After the user completes all the check-in formalities, the hotel staff issues a physical card to the user for accessing the room. The existing procedure for completing the check-in formalities and providing access of the room to the user is a time-consuming task.

Further, sometimes, when the user reaches the hotel, the hotel staff may be busy in attending other users at the reception. This also causes delay in completing the check-in formalities for the user that makes the user wait till the time formalities are completed. Also, the user cannot use the room till the time his/her check-in formalities are completed. Additionally, a situation may arise when a network or a front-desk system of the hotel is not working/operational, which further causes delay in completing the check-in formalities. Such situations may lead to frustration and cause inconvenience to the user which creates a bad impression on the user. As a result, the user may not choose the same hotel next time and the hotel may lose the business. Moreover, it is very important for the hotel to provide convenience and good services to the user to sustain in competitive business.

In view of the afore-mentioned problems, there is a need of a solution for providing easy check-in formalities to a user of the hotel which does not cause delay in providing access of the room to the user. There is also a need of a system and method that provides check-in to the user without going through check-in formalities at the reception. There is also a requirement of a solution that provides check-in to the user even when the network or the front-desk system is not working or when there are other users at the reception. In order to solve the afore-mentioned problems, a system and a method is disclosed.

US 2018/130276 A1 discloses methods of providing a guest with security credentials to gain access to a guest room.

US 2017/161978 A1 discloses systems and methods for authenticating a passive smart device for unlocking an electronic lock.

US 2016/162811 is related to a system for facilitating remote check-in to a user in a room, of a hotel, booked by the user.

Viewed from a first aspect, the present invention provides a method as claimed in claim 1.

Optionally, the received user credentials are compared with the generated user credentials for validation.

Optionally, the accessing device identifies if a user of the user device has opted for one or more privileges to access the accessing device and generates the user credentials if the user has opted for the one or more privileges.

Optionally, the one or more privileges comprise a privilege provided to the user to access the accessing device in an emergency situation. Further, the emergency situation optionally comprises a network failure situation, a front-desk system failure situation, an access card loss situation or an over-crowded front-desk situation.

Optionally, the access card is detected by the accessing device from a pre-defined distance range.

Optionally, the accessing device detects the access card based on an identifier of the access card.

Optionally, the communication between the accessing device and the user device corresponds to a short-range communication.

Optionally, the user credentials generated by the accessing device are updated to other accessing devices associated with other facilities in the premises.

In a second aspect, the present invention provides an accessing device as claimed in claim 9.

Optionally, the accessing device is adapted to identify if a user of the user device has opted for one or more privileges to access the accessing device and adapted to generate the user credentials if the user has opted for the one or more privileges.

Optionally, the one or more privileges comprise a privilege provided to the user to access the accessing device in an emergency situation. Further, the emergency situation optionally comprises a network failure situation, a front-desk system failure situation, an access card loss situation or an over-crowded front-desk situation.

Optionally, the received user credentials are compared with the generated user credentials for validation.

Optionally, the communication between with accessing device and the user device corresponds to a short-range communication.

Optionally, the user credentials generated by the accessing device are updated to other accessing devices associated with other facilities in the premises.

In a third aspect, the present invention provides computer readable medium as claimed in claim 15.

This summary is provided to introduce a selection of concepts in a simplified form from those that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which, taken in conjunction with the annexed drawings, discloses exemplary embodiments of the invention.
Figure 1 depicts an exemplary architecture for providing access of an accessing device to a user.
Figure 2 depicts block diagram of different components in an accessing device.
Figure 3 depicts block diagram of different components in a user device.
Figure 4 depicts an exemplary flowchart illustrating a method to perform the invention.

Corresponding reference numerals indicate corresponding parts throughout the drawings.

Described herein is the technology for a device and a method for providing easy access of an accessing device to a user. Further, the accessing device may communicate with a user device of the user through a short-range communication. Also, the accessing device may communicate with a server through a cellular communication.

As used herein, the accessing device is installed on a premises and may comprise a communication unit, a detection unit, a generation unit, a keypad, a processor and a memory. The accessing device comprises a lock, and may be a smart lock, an electromechanical lock, an electronic lock or any such device that is understood by a person skilled in the art, Also, the premises can be a building, a door, a room with a door or a floor where the accessing device can be installed.

As used herein, the user device is associated with a user, wherein the user may be a guest, an agent or any person who wishes to access the accessing device. The user device may be a desktop computer or a hand held device such as a mobile phone with network connectivity. Example of the user device includes a desktop, workstation PC, a laptop, a smart phone, a tablet, a wearable device and the like.

As used herein, the server has one or more processing capabilities and may also communicate with the accessing device and a front desk system through a cellular communication. The server may be a cloud storage, a remote database, or any such storage known in the art.

As used herein, the front desk system is associated with a staff personnel. The front desk system may be a desktop computer or a hand held device such as a mobile phone with network connectivity. Example of the front desk system includes a desktop, workstation PC, a laptop, a smart phone, a tablet, a wearable device and the like.

As used herein, the short-range communication may refer to a communication established through a Wi-Fi access point, a Bluetooth network, a near-field network, or a ZigBee network or any such communication that is known in the art.

As used herein, the cellular communication may refer to a communication established through a Global System for Mobile (GSM) network, Long-Term Evolution (LTE) network, a code-division multiple access (CDMA) network, a narrow-band internet of thing (NB-IoT) technique or category M1 technique or any such communication that is known in the art.

Throughout the specification, reference numeral 114 can be considered as one or more network. The reference numeral 114A, 114B, 114C...114N can be considered as a single network.

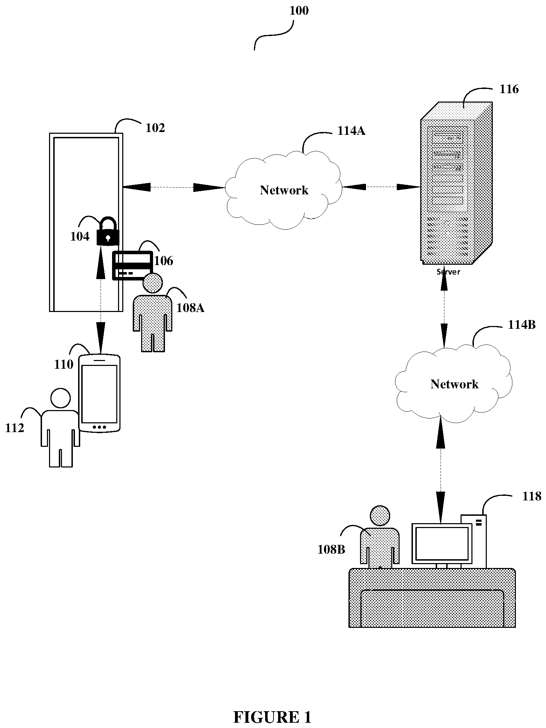

Figure 1 depicts an exemplary architecture 100 for providing access of an accessing device to a user, according to an exemplary embodiment of the invention. The exemplary architecture 100 comprises a premises 102, an accessing device 104 associated with the premises 102, an access card 106, a first staff personnel 108A, a user 112 associated with a user device 110, a server 116 connected with a network 114 and a second staff personnel 108B associated with a front desk system 118. As can be seen in Figure 1, the accessing device 104 may be connected with the server 116 through the network 114A and the front desk system 118 may be connected with the server 116 through the network 114B.

Considering an exemplary situation, when the user 112 has booked the premises 102 of a hotel and reaches the hotel, then the user 112 may request the first staff personnel 108A to assist the user 112 to check-in or access the premises 102 of the hotel. In order to help the user 112, the first staff personnel 108A may escort the user 112 to the premises 102. When the first staff personnel 108A and the user 112 reach the premises 102, the first staff personnel 108A may present the access card 106 to the accessing device 104 associated with the premises 102. Such access card 106 may be associated with the hotel and may be pre-configured with details of the hotel. For example, the first staff personnel 108A may perform a special operation like presenting the access card 106 to the accessing device 104 three times in succession within a duration of 5 minutes. The accessing device 104 may understand the said pattern of presenting the access card 106 and then establish a communication with the user device 110 through a short-range communication.

The accessing device 104 may detect the access card 106 when the access card 106 is present in a pre-defined distance range of the accessing device 104. Also, the accessing device 104 may detect the access card based on an identifier of the access card 106. The accessing device 104 may detect the access card 106 through infra-red (IR) technology, radio-frequency identification (RFID) technology, Bluetooth technology, near-filed communication technology or any such technology known in the art.

Once the accessing device 104 detects the access card 106, the accessing device 104 establishes a communication with the user device 110 of the user 112. In an embodiment, the communication between the user device 110 and the accessing device 104 may be a short-range communication. In an alternative embodiment, the communication between the user device 110 and the accessing device 104 may be a cellular communication. After, the communication between the user device 110 and the accessing device 104 is established, the accessing device 104 generates user credentials for the user 112 to access the accessing device 104 associated with the premises 102. In an embodiment, the accessing device 104 may generate user credentials based on a booking information of the user 112, wherein the booking information is present in an application (of the hotel or through which the user 112 has done the booking of the premises 102) stored in the user device 110. In particular, the accessing device 104 may request the booking information through the short-range communication from the application stored in the user device 110. In turn, the user device 110 transmits the booking information from the application stored in the user device 110 to the accessing device 104. In an alternative embodiment, the accessing device 104 may request the booking information of the user 112 from the server 116 through the network 114A. As used herein, the user credentials may be a unique identifier, a pin number, an alphanumeric password, a command which enables an option of an unlocking of the premises 102 at the user device 110 or any such user credentials known in the art.

Then, the accessing device 104 transmits the generated user credentials to the user device 110 e.g. through the short-range communication. Subsequently, the user device 110 may receive the user credentials through the short-range communication and then the user 112 of the user device 110 may use the user credentials to access the accessing device 104 associated with the premises 102. In particular, the user 112 may enter the user credentials in the accessing device 104 or may click on an option provided in the application of the hotel to communicate the user credentials to the accessing device 104. The accessing device 104 receives the user credentials from the user device 110 and then validates the user credentials received from the user device 110 with the user credentials generated by the accessing device 104. Specifically, the accessing device 104 may compare the user credentials received from the user device 110 with the user credentials generated by the accessing device 104. If the user credentials received from the user device 110 matches with the user credentials generated by the accessing device 104, then the accessing device 104 will provide access of the accessing device 104 to the user 112. Alternatively, if the user credentials received from the user device 110 do not match with the user credentials generated by the accessing device 104, then the accessing device 104 will not provide access of the accessing device 104 to the user 112.

Further, the present invention also encompasses the accessing device 104 to communicate with the server 116 through the network 114A to update the user credentials provided to the user 112 to access the accessing device 104 associated with the premises 102. Also, the second staff personnel 108B associated with the front desk system 118 may communicate with the server 116 through the network 114B to receive the user credentials allocated by the accessing device 104 to the user 112 to access the accessing device 104.

The present invention further facilitates the accessing device 104 to generate the user credentials user 112 of the user device 110 if the user 112 of the user device 110 has opted for one or more privileges to access the accessing device 104. In an embodiment, the one or more privileges can be opted by the user 112 while booking the premises 102. In another embodiment, the one or more privileges can be opted by the user 112 after reaching the hotel. In order to determine if the user 112 of the user device 110 has opted for the one or more privileges, the accessing device 104 may request the application stored in the user device 110 to confirm if the user 112 of the user device 110 has opted for the one or more privileges. The application may determine this by checking the booking information for the premises 102 done by the user 112. Then, the application may communicate with the accessing device 104 to confirm if the user 112 of the user device 110 has opted for the one or more privileges or not. In an alternative embodiment, the accessing device 104 may communicate the server 116 through the network 114A to determine if the user 112 of the user device 110 has opted for the one or more privileges or not. Moreover, the second staff personnel 108B associated with the front desk system 118 may also access the booking information as well as any other information of the hotel from the server 116 through the network 114B.

Moreover, the one or more privileges may comprise a privilege provided to the user 112 to access the accessing device 104 in an emergency situation. The user 112 may also avail one or more features/facilities in the premises 102 of a hotel or may avail coupon codes as well to access the accessing device 104. As used herein, the emergency situation may comprise a situation of the network 114 failure, a situation of the front-desk system 118 failure, the access card 106 loss situation and/or an over-crowded front desk situation. The network failure situation may occur when the network is not functional or operational in any place or building or the hotel. Such network may be a cellular network, a room service network, a short-range network or any such network known in the art. Further, the front-desk system failure situation may arise when the front-desk system does not function or operate due to any technical reason or any other reason. The over-crowded front desk situation may occur when there is an unexpected huge crowd at a reception or front desk or any place or building or the hotel. The access card loss situation occurs when the user of the premises loses the access card associated with the premises and needs to access the premises without using the access card.

The present invention also facilitates the accessing device 104 to transmit the user credentials generated for the premises 102 to other accessing device associated with other facilities in the premises through a subnet, a room service network, a short-range network or a cellular network. For an instance, the accessing device 104 associated with the premises 102 may transmit an update message to an accessing device associated with a restaurant, an accessing device associated with a gym or an accessing device associated with a swimming pool of the hotel. The accessing device 104 associated with the premises 102 updates the other accessing device for the user credentials provided to the user 112 for the premises 102 so that that user 112 of the premises 102 easily gets access to the other premises in the hotel without any intervention.

Although the present invention has been described with a scenario where the user 112 wishes to access the accessing device 104 of a hotel; however it is well understood for the person skilled in the art that such solution can be also implemented in other buildings like colleges, university, hospitals, offices or any such place where the accessing devices are used to allow or deny access to the user.

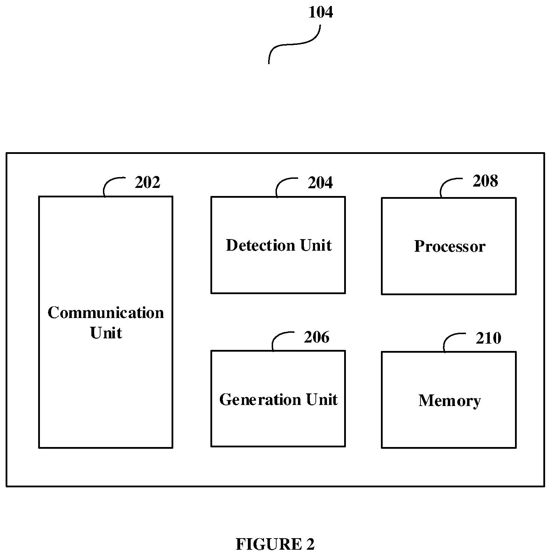

Figure 2 depicts block diagram of different components in an accessing device 104 according to an exemplary embodiment of the invention. The accessing device 104 may comprise a communication unit 202, a detection unit 204, a generation unit 206, a processor 208 and a memory 210. The detection unit 204 of the accessing device 104 may be adapted to detect an access card 106 by the accessing device 104 associated with a premises 102. The communication unit 202 may be adapted to communicate with the user device 110 through the short-range communication. The communication unit 202 may also be adapted to communicate with the server 116 through the cellular communication. Further, the communication unit 202 may be adapted to establish a communication between the accessing device 104 and the user device 110 after detecting the access card 106. In an embodiment, the communication unit 202 may be a short-range transceiver. In another embodiment, the communication unit 202 may be a cellular transceiver. The generation unit 206 may be adapted to generate user credentials for the user 112 of the user device 110 to access the accessing device 104. The communication unit 202 may also be adapted to transmit the user credentials to the user device 110 to access the accessing device 104. The communication unit 202 may further be adapted to receive the user credentials from the user 112. Moreover, the processor 208 may be adapted to validate the user credentials received from the user 112 by comparing the user credentials received from the user 112 with the user credentials generated by the accessing device 104. The memory 210 may be adapted to store the user credentials generated by the accessing device 104, an identifier of the accessing device, an identifier of the premises 102 and/or identifier of the user device 110. The processor 208 may be communicably coupled with the communication unit 202, the detection unit 204, the generation unit 206, and/or the memory 210.

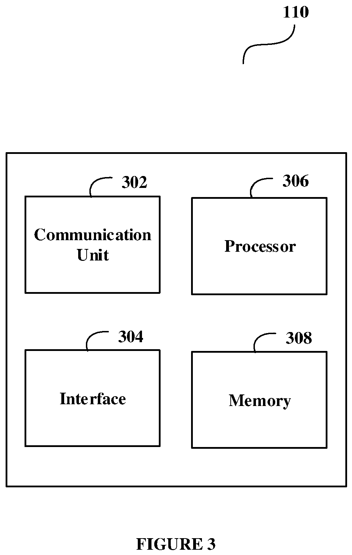

Figure 3 depicts block diagram of different components in a user device 110 according to an exemplary embodiment of the invention. The user device 110 may comprise a communication unit 302, an interface 304, a processor 306 and a memory 308. The communication unit 302 may be adapted to communicate with the accessing device 104 through the short-range communication or the cellular communication. Further, the communication unit 302 may be adapted to establish a communication between the accessing device 104 and the user device 110. In an embodiment, the communication unit 302 may be a short-range transceiver. In another embodiment, the communication unit 302 may be a cellular transceiver. The interface 304 may be adapted to display an application of the hotel or any service on the user device 110. The memory 308 may be adapted to store the application, the user credentials, and an identifier of the accessing device, an identifier of the premises 102 and/or identifier of the user device 110. The processor 306 may be communicably coupled with the communication unit 302, the interface 304, and/or the memory 308.

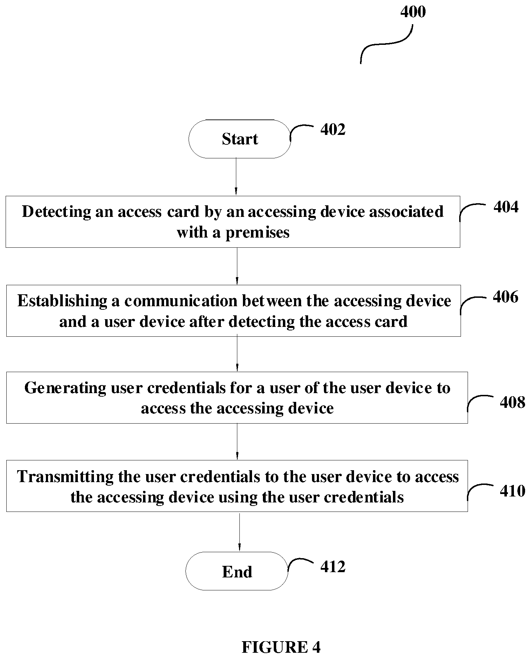

Figure 4 depicts an exemplary flowchart illustrating a method to perform the invention according to an exemplary embodiment of the invention. The method flowchart 400 describes a method being performed for enabling the invention. The method flowchart 400 starts at step 402.

At step 404, the accessing device 104 detects the access card 106. The accessing device 104 may detect the access card 106 when the access card 106 is present in a pre-defined distance range of the accessing device 104. Also, the accessing device 104 may detect the access card based on an identifier of the access card 106.

At step 406, the accessing device 104 establishes a communication with the user device 110 of the user 112 after detecting the access card 106. In an embodiment, the communication between the user device 110 and the accessing device 104 may be a short-range communication. In an alternative embodiment, the communication between the user device 110 and the accessing device 104 may be a cellular communication.

At step 408, the accessing device 104 generates user credentials for the user 112 to access the accessing device 104 associated with the premises 102 after establishing the communication between the user device 110 and the accessing device 104.

At step 412, the accessing device 104 transmits the user credentials to the user device 110 through the short-range communication. The method 400 may end at step 414.

The present invention is applicable in various industries/fields such as, but not limited to, hospitality industry, housing industry, building/construction industry, offices, hospitals, and any such industry/field where the accessing devices are used and that is well known in the art.

The present invention provides the following technical advantages over the existing solutions in the market: a) provides convenience to the user by providing access to the user without completing the check-in formalities, b) eliminate usage of issuing access card to the user and carrying the access card by the user, c) provides alternative solution for handling user in emergency situation, d) does not require any manual intervention for providing access to the user and e) offers continuous assistance to the user even when there is a failure.

In one embodiment of the invention, the invention can be operated using the one or more computer readable devices comprising a computer readable medium. The computer readable medium of the computer readable devices is configured to a computer readable medium is disclosed comprising one or more processors and a memory coupled to the one or more processors. The memory stores instructions which are executed by the one or more processors to detect an access card 106 by an accessing device 104 associated with a premises 102 and establish a communication between the accessing device 104 and a user device 110 after detecting the access card 106. The memory also stores instructions which are executed by the one or more processors to generate user credentials for a user 112 of the user device 110 to access the accessing device 104 and transmit the user credentials to the user device 110 to access the accessing device 104 using the user credentials.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices. Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. Other examples of the invention may include different computer-executable instructions or components having more or less functionality than illustrated and described herein.

Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C".

## Claims

1. A method comprising:
- detecting (404) an access card (106) by an accessing device (104) associated with a premises (102), wherein the accessing device comprises a lock for installation on the premises;
- establishing (406) a communication between the accessing device and a user device (110) after detecting the access card;
- generating (408), by the accessing device after the communication between the accessing device and the user device is established, user credentials for a user of the user device to access the accessing device;
- transmitting (410) the user credentials to the user device to access the accessing device using the user credentials; and
- receiving, at the accessing device, the user credentials from the user and providing access to the user based on a validation of the user credentials.

2. The method of claim 1, wherein the received user credentials are compared with the generated user credentials for validation.

3. The method of claim 1, wherein the accessing device (104) identifies if a user of the user device (110) has opted for one or more privileges to access the accessing device and generates the user credentials if the user has opted for the one or more privileges.

4. The method of claim 3, wherein the one or more privileges comprise a privilege provided to the user to access the accessing device (104) in an emergency situation;
wherein the emergency situation optionally comprises a network failure situation, a front-desk system failure situation, an access card loss situation or an over-crowded front-desk situation.

5. The method of claim 1, wherein the access card (106) is detected by the accessing device (104) from a pre-defined distance range.

6. The method of claim 1, wherein the accessing device (104) detects the access card (106) based on an identifier of the access card.

7. The method of claim 1, wherein the communication between the accessing device (104) and the user device (110) corresponds to a short-range communication.

8. The method of claim 1, wherein the user credentials generated by the accessing device (104) are updated to other accessing devices associated with other facilities in the premises (102).

9. An accessing device (104) comprising a lock for installation on a premises (102), the accessing device comprising:
- a detection unit (204) adapted to detect an access card (106) associated with the premises;
- a communication unit (202) adapted to establish a communication between the accessing device and a user device (110) after detecting the access card;
- a generation unit (206) adapted to generate user credentials for a user of the user device to access the accessing device; and
- the communication unit adapted to transmit the user credentials to the user device to access the accessing device using the user credentials;
wherein the accessing device is configured to receive the user credentials from the user and to provide access to the user based on a validation of the user credentials.

10. The accessing device of claim 9, wherein the accessing device (104) is adapted to identify if a user of the user device (110) has opted for one or more privileges to access the accessing device and adapted to generate the user credentials if the user has opted for the one or more privileges.

11. The accessing device of claim 10, wherein the one or more privileges comprise a privilege provided to the user to access the accessing device (104) in an emergency situation;
wherein the emergency situation optionally comprises a network failure situation, a front-desk system failure situation, an access card loss situation or an over-crowded front-desk situation.

12. The accessing device of claim 9, wherein the received user credentials are compared with the generated user credentials for validation.

13. The accessing device of claim 9, wherein the communication between the accessing device (104) and the user device (110) corresponds to a short-range communication.

14. The accessing device of claim 9, wherein the user credentials generated by the accessing device (104) are updated to other accessing devices associated with other facilities in the premises (102).

15. A computer readable medium comprising one or more processors and a memory coupled to the one or more processors, memory storing instructions executed by the one or more processors, the one or more processors configured to:
- detect an access card (106) by an accessing device (104) associated with a premises (102), wherein the accessing device comprises a lock for installation on the premises;
- establish a communication between the accessing device and a user device (110) after detecting the access card;
- generate, by the accessing device after the communication between the accessing device and the user device is established, user credentials for a user of the user device to access the accessing device;
- transmit the user credentials to the user device to access the accessing device using the user credentials; and
- receive, at the accessing device, the user credentials from the user and provide access to the user based on a validation of the user credentials.

## Patentansprüche

1. Verfahren, umfassend:
- Erfassen (404) einer Zugangskarte (106) durch eine Zugriffsvorrichtung (104), die mit einer Räumlichkeit (102) verbunden ist, wobei die Zugriffsvorrichtung ein Schloss zur Installation an der Räumlichkeit umfasst;
- Aufbauen (406) einer Kommunikation zwischen der Zugriffsvorrichtung und einer Benutzervorrichtung (110) nach Erfassung der Zugangskarte;
- Erzeugen (408) von Benutzeranmeldeinformationen für einen Benutzer der Benutzervorrichtung durch die Zugriffsvorrichtung, nachdem die Kommunikation zwischen der Zugriffsvorrichtung und der Benutzervorrichtung aufgebaut ist, um auf die Zugriffsvorrichtung zuzugreifen;
- Übertragen (410) der Benutzeranmeldeinformationen an die Benutzervorrichtung, um auf die Zugriffsvorrichtung unter Verwendung der Benutzeranmeldeinformationen zuzugreifen; und
- Empfangen der Benutzeranmeldeinformationen vom Benutzer an der Zugriffsvorrichtung und Erteilen des Zugriffs an den Benutzer auf der Grundlage einer Validierung der Benutzeranmeldeinformationen.

2. Verfahren nach Anspruch 1, wobei die empfangenen Benutzeranmeldeinformationen mit den erzeugten Benutzeranmeldeinformationen zur Validierung verglichen werden.

3. Verfahren nach Anspruch 1, wobei die Benutzervorrichtung (104) identifiziert, ob ein Benutzer der Benutzervorrichtung (110) sich für ein oder mehrere Privilegien zum Zugriff auf die Benutzervorrichtung entschieden hat, und die Benutzeranmeldeinformationen erstellt, wenn der Benutzer sich für das eine oder die mehreren Privilegien entschieden hat.

4. Verfahren nach Anspruch 3, wobei das eine oder die mehreren Privilegien ein Privileg umfassen, das an den Benutzer bereitgestellt wird, um in einer Notfallsituation auf die Zugriffsvorrichtung (104) zuzugreifen;
wobei die Notsituation gegebenenfalls einen Ausfall des Netzwerks, einen Ausfall des Front-Desk-Systems, einen Verlust der Zugangskarte oder eine Überfüllung des Front-Desks umfasst.

5. Verfahren nach Anspruch 1, wobei die Zugangskarte (106) von der Zugriffsvorrichtung (104) aus einem vordefinierten Abstandsbereich erkannt wird.

6. Verfahren nach Anspruch 1, wobei die Zugriffsvorrichtung (104) die Zugangskarte (106) auf der Grundlage einer Kennung der Zugangskarte erfasst.

7. Verfahren nach Anspruch 1, wobei die Kommunikation zwischen der Zugriffsvorrichtung (104) und der Benutzervorrichtung (110) einer Nahbereichskommunikation entspricht.

8. Verfahren nach Anspruch 1, wobei die von der Benutzervorrichtung (104) erstellten Benutzeranmeldeinformationen in anderen Benutzervorrichtungen, die mit anderen Einrichtungen in den Räumlichkeiten (102) verbunden sind, aktualisiert werden.

9. Zugriffsvorrichtung (104), die ein Schloss zur Installation in einer Räumlichkeit (102) umfasst, wobei die Zugriffsvorrichtung Folgendes umfasst:
- eine Erfassungseinheit (204), die dazu ausgelegt ist, eine mit den Räumlichkeiten verbundene Zugangskarte (106) zu erfassen;
- eine Kommunikationseinheit (202), die dazu ausgelegt ist, nach dem Erfassen der Zugangskarte eine Kommunikation zwischen der Zugriffsvorrichtung und einer Benutzervorrichtung (110) aufzubauen;
- eine Erzeugungseinheit (206), die dazu ausgelegt ist, Benutzeranmeldeinformationen für einen Benutzer der Benutzervorrichtung für den Zugriff auf die Zugriffsvorrichtung zu erzeugen; und
- wobei die Kommunikationseinheit dazu ausgelegt ist, die Benutzeranmeldeinformationen an die Benutzervorrichtung zu übertragen, um unter Verwendung der Benutzeranmeldeinformationen auf die Zugriffsvorrichtung zuzugreifen;
wobei die Zugriffsvorrichtung dazu konfiguriert ist, die Benutzeranmeldeinformationen zu empfangen und dem Benutzer auf der Grundlage einer Validierung der Benutzeranmeldeinformationen Zugriff zu gewähren.

10. Zugriffsvorrichtung nach Anspruch 9, wobei die Zugriffsvorrichtung (104) dazu ausgelegt ist, zu identifizieren, ob ein Benutzer der Benutzervorrichtung (110) sich für ein oder mehrere Privilegien entschieden hat, um auf die Zugriffsvorrichtung zuzugreifen, und dazu ausgelegt ist, die Benutzeranmeldeinformationen zu erzeugen, wenn der Benutzer sich für das eine oder die mehreren Privilegien entschieden hat.

11. Zugriffsvorrichtung nach Anspruch 10, wobei das eine oder die mehreren Privilegien ein Privileg umfassen, das an den Benutzer bereitgestellt wird, um in einer Notfallsituation auf die Zugriffsvorrichtung (104) zuzugreifen;
wobei die Notsituation gegebenenfalls einen Ausfall des Netzwerks, einen Ausfall des Front-Desk-Systems, einen Verlust der Zugangskarte oder eine Überfüllung des Front-Desks umfasst.

12. Zugriffsvorrichtung nach Anspruch 9, wobei die empfangenen Benutzeranmeldeinformationen mit den erzeugten Benutzeranmeldeinformationen zur Validierung verglichen werden.

13. Zugriffsvorrichtung nach Anspruch 9, wobei die Kommunikation zwischen der Zugriffsvorrichtung (104) und der Benutzervorrichtung (110) einer Nahbereichskommunikation entspricht.

14. Zugriffsvorrichtung nach Anspruch 9, wobei die von der Benutzervorrichtung (104) erstellten Benutzeranmeldeinformationen in anderen Benutzervorrichtungen, die mit anderen Einrichtungen in den Räumlichkeiten (102) verbunden sind, aktualisiert werden.

15. Computerlesbares Medium, das einen oder mehrere Prozessoren und einen mit dem einen oder den mehreren Prozessoren gekoppelten Speicher umfasst, wobei der Speicher Anweisungen speichert, die von dem einen oder den mehreren Prozessoren ausgeführt werden, wobei der eine oder die mehreren Prozessoren konfiguriert sind zum:
- Erfassen einer Zugangskarte (106) durch eine Zugriffsvorrichtung (104), die mit einer Räumlichkeit (102) verbunden ist, wobei die Zugriffsvorrichtung ein Schloss zur Installation an der Räumlichkeit umfasst;
- Aufbauen einer Kommunikation zwischen der Zugriffsvorrichtung und einer Benutzervorrichtung (110) nach Erfassung der Zugangskarte;
- Erzeugen von Benutzeranmeldeinformationen für einen Benutzer der Benutzervorrichtung durch die Zugriffsvorrichtung, nachdem die Kommunikation zwischen der Zugriffsvorrichtung und der Benutzervorrichtung aufgebaut ist, um auf die Zugriffsvorrichtung zuzugreifen;
- Übertragen der Benutzeranmeldeinformationen an die Benutzervorrichtung, um auf die Zugriffsvorrichtung unter Verwendung der Benutzeranmeldeinformationen zuzugreifen; und
- Empfangen der Benutzeranmeldeinformationen vom Benutzer in der Zugriffsvorrichtung und Erteilen des Zugriffs an den Benutzer auf der Grundlage einer Validierung der Benutzeranmeldeinformationen.

## Revendications

1. Procédé comprenant :
- la détection (404) d'une carte d'accès (106) par un dispositif d'accès (104) associé à des locaux (102), dans lequel le dispositif d'accès comprend une serrure destinée à être installée sur les locaux ;
- l'établissement (406) d'une communication entre le dispositif d'accès et un dispositif utilisateur (110) après la détection de la carte d'accès ;
- la génération (408), par le dispositif d'accès, après que la communication entre le dispositif d'accès et le dispositif utilisateur est établie, d'un justificatif d'identité utilisateur pour qu'un utilisateur du dispositif utilisateur accède au dispositif d'accès ;
- la transmission (410) du justificatif d'identité utilisateur au dispositif utilisateur pour accéder au dispositif d'accès en utilisant le justificatif d'identité utilisateur ; et
- la réception, au niveau du dispositif d'accès, du justificatif d'identité utilisateur provenant de l'utilisateur et la fourniture d'un accès à l'utilisateur sur la base d'une validation du justificatif d'identité utilisateur.

2. Procédé selon la revendication 1, dans lequel le justificatif d'identité utilisateur reçu est comparé au justificatif d'identité utilisateur généré pour validation.

3. Procédé selon la revendication 1, dans lequel le dispositif d'accès (104) identifie si un utilisateur du dispositif utilisateur (110) a opté pour un ou plusieurs privilèges afin d'accéder au dispositif d'accès et génère le justificatif d'identité utilisateur si l'utilisateur a opté pour les un ou plusieurs privilèges.

4. Procédé selon la revendication 3, dans lequel les un ou plusieurs privilèges comprennent un privilège fourni à l'utilisateur pour accéder au dispositif d'accès (104) dans une situation d'urgence ;
dans lequel la situation d'urgence comprend facultativement une situation de défaillance de réseau, une situation de défaillance de système de réception, une situation de perte de carte d'accès, ou une situation de réception surpeuplée.

5. Procédé selon la revendication 1, dans lequel la carte d'accès (106) est détectée par le dispositif d'accès (104) depuis une plage de distance prédéfinie.

6. Procédé selon la revendication 1, dans lequel le dispositif d'accès (104) détecte la carte d'accès (106) sur la base d'un identifiant de la carte d'accès.

7. Procédé selon la revendication 1, dans lequel la communication entre le dispositif d'accès (104) et le dispositif utilisateur (110) correspond à une communication à courte portée.

8. Procédé selon la revendication 1, dans lequel le justificatif d'identité utilisateur généré par le dispositif d'accès (104) est mis à jour à d'autres dispositifs d'accès associés à d'autres installations dans les locaux (102).

9. Dispositif d'accès (104) comprenant une serrure destinée à être installée sur des locaux (102), le dispositif d'accès comprenant :
- une unité de détection (204) adaptée pour détecter une carte d'accès (106) associée aux locaux ;
- une unité de communication (202) adaptée pour établir une communication entre le dispositif d'accès et un dispositif utilisateur (110) après que la carte d'accès a été détectée ;
- une unité de génération (206) adaptée pour générer un justificatif d'identité utilisateur permettant à un utilisateur du dispositif utilisateur d'accéder au dispositif d'accès ; et
- l'unité de communication étant adaptée pour transmettre le justificatif d'identité utilisateur au dispositif utilisateur afin d'accéder au dispositif d'accès en utilisant le justificatif d'identité utilisateur ;
dans lequel le dispositif d'accès est configuré pour recevoir le justificatif d'identité utilisateur en provenance de l'utilisateur et pour fournir un accès à l'utilisateur sur la base d'une validation du justificatif d'identité utilisateur.

10. Dispositif d'accès selon la revendication 9, dans lequel le dispositif d'accès (104) est adapté pour identifier si un utilisateur du dispositif utilisateur (110) a opté pour un ou plusieurs privilèges pour accéder au dispositif d'accès, et adapté pour générer le justificatif d'identité utilisateur si l'utilisateur a opté pour les un ou plusieurs privilèges.

11. Dispositif d'accès selon la revendication 10, dans lequel les un ou plusieurs privilèges comprennent un privilège fourni à l'utilisateur pour accéder au dispositif d'accès (104) dans une situation d'urgence ;
dans lequel la situation d'urgence comprend facultativement une situation de défaillance de réseau, une situation de défaillance de système de réception, une situation de perte de carte d'accès, ou une situation de réception surpeuplée.

12. Dispositif d'accès selon la revendication 9, dans lequel le justificatif d'identité utilisateur reçu est comparé au justificatif d'identité utilisateur généré pour validation.

13. Dispositif d'accès selon la revendication 9, dans lequel la communication entre le dispositif d'accès (104) et le dispositif utilisateur (110) correspond à une communication à courte portée.

14. Dispositif d'accès selon la revendication 9, dans lequel le justificatif d'identité utilisateur généré par le dispositif d'accès (104) est mis à jour à d'autres dispositifs d'accès associés à d'autres installations dans les locaux (102).

15. Support lisible par ordinateur comprenant un ou plusieurs processeurs et une mémoire couplée aux un ou plusieurs processeurs, la mémoire stockant des instructions exécutées par les un ou plusieurs processeurs, les un ou plusieurs processeurs étant configurés pour :
- détecter une carte d'accès (106) par un dispositif d'accès (104) associé à des locaux (102), dans lequel le dispositif d'accès comprend une serrure destinée à être installée sur les locaux ;
- établir une communication entre le dispositif d'accès et un dispositif utilisateur (110) après avoir détecté la carte d'accès ;
- générer, par le dispositif d'accès, après que la communication entre le dispositif d'accès et le dispositif utilisateur est établie, un justificatif d'identité utilisateur pour qu'un utilisateur du dispositif utilisateur accède au dispositif d'accès ;
- transmettre le justificatif d'identité utilisateur au dispositif utilisateur pour accéder au dispositif d'accès en utilisant le justificatif d'identité utilisateur ; et
- recevoir, au dispositif d'accès, le justificatif d'identité utilisateur en provenance de l'utilisateur, et fournir un accès à l'utilisateur sur la base d'une validation du justificatif d'identité utilisateur.
